# EUROPEAN PATENT SPECIFICATION

(11) **EP 4 650 020 B1**
(45) Date of publication and mention of the grant of the patent: **14.10.2026**
(21) Application number: 25170629.7
(22) Date of filing: 15.04.2025
(51) Int. Cl.: A63F 13/57, G06T 13/60, G06T 15/08

(54) **SIMULATION METHOD AND APPARATUS**
SIMULATIONSVERFAHREN UND -VORRICHTUNG
PROCÉDÉ ET APPAREIL DE SIMULATION

(30) Priority: 14.05.2024 GB 202406778
(43) Date of publication of application: 19.11.2025
(73) Proprietor: Sony Interactive Entertainment Inc., Tokyo 108-0075 (JP)
(72) Inventor: SWANN, Andrew, London, W1F 7LP (GB); CRACIUN, Cristian, London, W1F 7LP (GB); PANESAR, Pritpal, London, W1F 7LP (GB); NEDELCU, Radu-Andrei, London, W1F 7LP (GB); SUNDARAM, Chockalingam Ravi, London, W1F 7LP (GB); MOTILLA, Daniel, London, W1F 7LP (GB); VILLANUEVA-BARREIRO, Marina, London, W1F 7LP (GB)
(74) Representative: Fish & Richardson P.C.

(56) References cited:
- KOVALOVS ARTEM ARTEM KOVALOVS@GMAIL COM: "Volumetric Effects of The Last of Us: Part Two", SPECIAL INTEREST GROUP ON COMPUTER GRAPHICS AND INTERACTIVE TECHNIQUES CONFERENCE TALKS, ACMPUB27, NEW YORK, NY, USA, 17 August 2020 (2020-08-17), pages 1 - 2, XP058464692, ISBN: 978-1-4503-7971-7, DOI: 10.1145/3388767.3407393
- SUTA ANTON ET AL: "Comparing Traditional Rendering Techniques to Deep Learning Based Super-Resolution in Fire and Smoke Animations", 1 January 2023, 20230101, PAGE(S) 199 - 210, XP047642801

## Description

### BACKGROUND OF THE INVENTION

### Field of the invention

The present invention relates to a simulation method and apparatus.

### Description of the Prior Art

Video graphics applications, such as in video games, TV shows, and movies, sometimes use volumetric effects to model smoke, fog, or other fluid or particle interactions such as the flow of water or sand, or an avalanche or rockslide, or fire.

Typically such volumetric effects are part of a complex rendering pipeline, being potentially responsive to the topology of the rendered environment, the textures / colours of that environment, and the lighting of that environment, as well as the properties of the volumetric material itself. These factors are then combined within the calculation for the volume of the effect, and this can result in a significant computational cost to the system.

In practice this computational cost can result in either slow production of a TV show or film, or in adversely reducing the frame rate in a live generation of a video game.

One solution to this problem is to model the volumetric effect at a much lower resolution than the rendered image, to reduce the computational overhead, and then blend the results generated for a number of frames (e.g. ten) to smooth out the results - which would otherwise be blocky and discontinuous between calculations and hence appear to flicker. However, this sacrifices temporal resolution in order to recover an illusion of spatial resolution.

The present invention seeks to address or mitigate this problem.

The conference papers Kovalovs, Artem: "Volumetric Effects of The Last of Us: Part Two", at SiG on Computer Graphics and Interactive Techniques Conference Talks, 17. August 2020; or
Suta, Anton, et. al.: "Comparing Traditional Rendering Techniques to Deep Learning Based Super-Resolution in Fire and Smoke Animations", at 39th Computer Graphics International Conference on Advances in Computer Graphics, CGI 2022
represent related background art.

### SUMMARY OF THE INVENTION

Various aspects and features of the present invention are defined in the appended claims and within the text of the accompanying description.

In a first aspect, a method of generating a training set is provided by claim 1.

In another aspect, a method of training a machine learning model is provided by claim 6.

In another aspect, a method of upscaling is provided by claim 7.

In another aspect, a training set generating apparatus is provided by claim 11.

In another aspect, a training apparatus is provided by claim 12.

In another aspect, a rendering apparatus is provided by claim 13.

In another aspect, an entertainment device is provided by claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device in accordance with embodiments of the present application.
- Figure 2 is a schematic diagram of a rendering pipeline in accordance with embodiments of the present application.
- Figures 3A and 3B are schematic diagrams of frame rendering in accordance with embodiments of the present application.
- Figure 3C is a schematic diagram of machine learning training in accordance with embodiments of the present application.
- Figure 4 is a flow diagram of a method of generating a training set in accordance with embodiments of the present application.
- Figure 5 is a flow diagram of a method of training a machine learning model in accordance with embodiments of the present application.
- Figure 6 is a flow diagram of a method of upscaling volumetric effect froxel grids in accordance with embodiments of the present application.
- Figure 7 is a schematic diagram of a rendering pipeline in accordance with embodiments of the present application.

### DESCRIPTION OF THE EMBODIMENTS

A simulation method and apparatus are disclosed. In the following description, a number of specific details are presented in order to provide a thorough understanding of the embodiments of the present invention. It will be apparent, however, to a person skilled in the art that these specific details need not be employed to practice the present invention, which is defined in the appended claims.

Conversely, specific details known to the person skilled in the art are omitted for the purposes of clarity where appropriate.

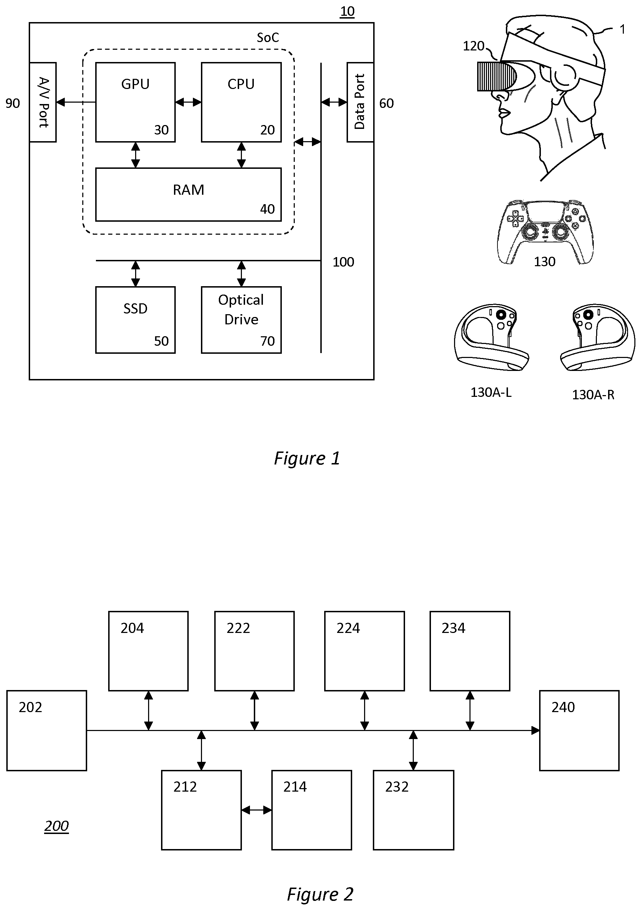

Referring now to the drawings, wherein like reference numerals designate identical or corresponding parts throughout the several views, Figure 1 shows an entertainment system 10 such as a computer or console as a non-limiting example of a platform that can implement the methods and techniques herein. The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Referring now also to Figure 2, such an entertainment system typically implements a rendering pipeline 200 that takes data 202 regarding what is visible in the scene and if necessary performs a so-called z-cull 204 to remove unnecessary elements. Initial texture/material and light map data are assembled 212, and static shadows 214 are computed as needed. Dynamic shadows 222 are then computed. Reflections 224 are then also computed.

At this point there is a basic representation of the scene, and additional elements 232 can be included such as translucency effects, or volumetric effects such as those discussed herein. Then any post-processing 242 such as tone mapping, depth of field, or camera effects can be applied, to produce the final rendered frame 240.

To generate the volumetric effects, existing rendering pipeline techniques generally use a volumetric simulation stage followed by a stage of calculating a low resolution froxel grid that samples the volumetric simulation.

A so-called froxel grid is a frustum-voxel grid; that is to say, a three dimensional grid of voxels that is warped to map into a virtual camera frustum. Hence the warp acts to convert a rectangular box of voxels into a truncated pyramid of similarly warped voxels fitting within the virtual camera frustum.

It will be appreciated that in practice there is no warping step per se; simply that is the shape assumed for the froxel grid for the purposes of rendering calculations. The froxel grid may also be referred to simply as a 'froxel' herein.

A low resolution froxel grid uses relatively large voxels, whereas a high resolution grid uses relative small voxels. 'Large' and 'small' in this case can depend on the computational budget available to the process of rendering the volumetric effect. However, typically the grid can be assumed to be 2, 4, 8, 16, 32, 64, or more times lower in resolution than the final rendered image, taking account of the effective size of the grid as a function of distance in the frustum. For example, a froxel grid may have dimensions 64x64x128 (i.e. 2D slices each 64x64 with 128 slices along the depth axis), or 80x45x64 or 160x90x128 for a more typical 16:9 aspect ratio image. The shape of the frustum means that there is a better spatial resolution within the virtual world closer to the virtual camera position.

A rendering stage then follows to obtaining a rendered image.

For convenience, the description herein may refer to 'fog' as a shorthand example of a volumetric effect, but it will be appreciated that the disclosure and techniques herein are not limited to fog, and may comprise for example other volumetric physical simulations, such as those of smoke, water, sand and other particulates such as in an avalanche or landslide, and fire.

An issue with existing approaches is that the rendered fog is of low quality, with poor temporal coherence. For example, sampling a potentially high resolution simulated fog dataset (or calculating values for a specific point to represent a large voxel) can give rise to a blocky simulation and flickering from one frame to the next as the values change.

As noted previously herein, one solution is to blend one low resolution froxel with previous low resolution froxel (e.g. blending in 90% of the samples from the previous low resolution froxel). This smooths the results but at the cost of temporal resolution, making the flow of the fog less clear.

In embodiments of the present description, the low resolution froxel grid is upscaled to a higher resolution. The higher resolution reduces intra-frame blockiness and also reduce flickering between frames if the values within the higher resolution representation of the froxel grid are more locally representative of the volumetric simulation from frame to frame. This reduces or removes the need for averaging across frames.

In this way, but the spatial and temporal resolution and fidelity of the fog can be improved, with comparatively little computational overhead if the upscaling process is more efficient than computing the simulation values directly at the higher resolution.

To this end, a machine learning model (MLM) can be used. The model can be trained using the low resolution froxel grid generated by the existing pipeline as the input, and a high resolution target.

Hence for example the machine learning model can be trained using a low resolution fog map (a froxel populated with values from a volumetric fog simulation) generated by the existing pipeline as the input, and a high resolution fog map as the target. Herein, 'fog map' is used as a shorthand for a froxel populated with values from a volumetric simulation of any suitable property, not just fog.

The MLM can receive the low resolution fog map in any suitable format; for example as a 3D grid or deconstructed into a flat 2D array. Each element in the grid or array in turn may have several inputs; the x, y, z coordinates of the element may be considered implicit in the structure of the input, or may also be explicitly input (although this increases computational load). Optionally a hybrid approach may be used for example with the flat 2D array including the z (depth) coordinate but not the x or y.

In addition, each element may comprise a greyscale value or a colour (e.g. RGB) value that indicates the fog density and optionally colour at the sample point of that element within the froxel.

Hence the input to the MLM may comprise x, y, z, R, G, B values for each element, or simply a greyscale value, or some combination in between such as either just RGB values, or z and greyscale or z and RGB values.

The input may also comprise temporal data; for example data from one or more previous inputs to the MLM, either in the same format or in a reduced format; for example sampling only every 2, 4, 8, 16, etc., froxels from one or more dimensions, thereby reducing the number of inputs by a factor of somewhere between 2 and 4096 depending on the sampling. These older inputs may also be simplified, for example using greyscale instead of RGB. In any event, optionally such temporal data helps the ML to further improve predicted values when upscaling.

As an example of the input and target data, the low resolution input data may, as a non-limiting example, be at a 160x90x128 resolution.

The 160x90x128 froxel may generate 14 MB of data (i.e. a froxel grid populated with data), and typically 14 GB for an input training sequence.

Meanwhile the high resolution target data may be at 640x360x128 (i.e. 4 times higher in each of the x and y dimensions) resulting in about 250 MB of data per froxel and 250 GB for a training sequence. Again, this example is not limiting.

The MLM is trained on such sequences to upscale from the low resolution froxel to the high resolution froxel.

However, obtaining the target high resolution froxel is problematic.

The target high resolution froxel grid should be compatible with the pipeline generating the low resolution froxel grid, so that in due course the low resolution froxel can be replaced with a corresponding high resolution froxel.

Furthermore, that pipeline will be a conventional pipeline that generates low resolution froxels using the blending methods described previously, where the calculations for the current frame may contribute only 10% to values within the froxel.

Meanwhile, it is desired for the target high resolution froxel to be unblended by preceding frames and thus temporally representative of its own frame's timing.

In addition, it is also desired for each high resolution froxel frame to consistently correspond with the low resolution froxel for the same frame.

Generating accurately corresponding low and high resolution froxels where the low resolution froxel is time averaged and the high resolution froxel is not, preferably using the same rendering pipeline for consistency between results, is difficult.

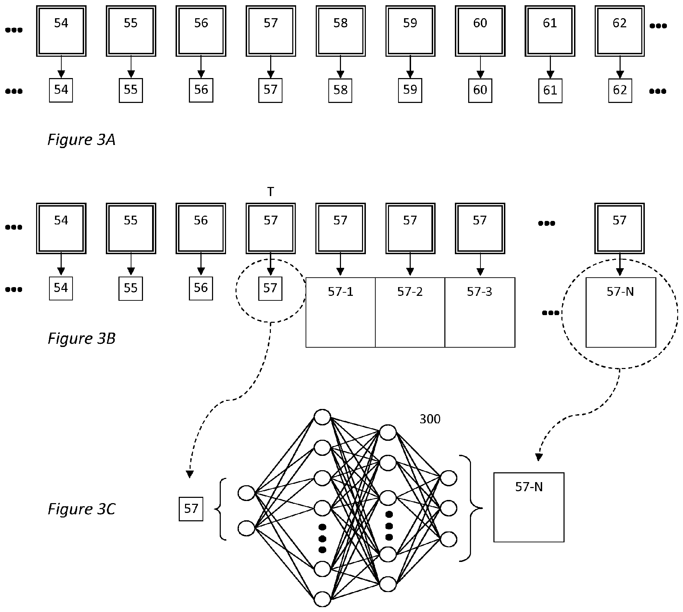

Accordingly, and referring now to figures 3A to 3C, in embodiments of the present description, a method of generating training data for the machine learning model comprises the following steps.

Referring to Figure 3A, a rendering sequence is run over a plurality of frames (here illustrating in double boxes frames 54 to 62 as non-limiting examples) with the existing rendering pipeline, which generates the low-resolution and time-blended froxel grid for each frame (illustrated by the smaller single boxes with a corresponding frame number).

Hence the input data corresponds to normal operation of the rendering pipeline. It will be appreciated that this input data may optionally be created for and by a default or a specific configuration of rendering pipeline used by a particular game, or game engine, for example the Unreal ^{®} game engine.

Hence also the input data is typically generated in real time and is similar to what the game engine would normally produce. It will be appreciated that each such froxel grid is calculated for a moment of in-game time determined by the generated frame rate.

Referring now to Figure 3B, to obtain properly corresponding target data, the rendering sequence is run again. Hence the sequence proceeds deterministically in the same way at each frame, and the timing of each frame is also typically the same as previously so that the same calculations contribute to the render.

However, at a given frame T (in this example frame 57), the game state (or more generally environment state, e.g. for film and TV) is frozen - but frame rendering continues. That is to say, rather than rendering a dynamic game state in which e.g. objects and/or the fog can move, now the game state is locked so that each render is of the same state, with objects and fog the same each time.

These renders now using a high resolution froxel grid (e.g. the parameters for this element of the pipeline are changed to implement this). Because the state is frozen, the fact that this render will be at a lower frame rate (due to more calculations) is not important, as in-game time has stopped.

Notably, the high resolution froxel is therefore computed multiple times as the frame rendering continues, but is rendering the same state over and over again. This is illustrated in Figure 3B as rendering example frame 57 over and over again, generating successive versions of the high resolution froxel grid 57-1, 57-2, 57-3 ... 57-N.

This serves to expel the historical (and lower resolution) influence of the older froxels from the blended model - or, if the new resolution froxel starts from scratch or from a predetermined seed value, serves to expect the influence of these initial conditions - so that eventually the high resolution froxel is only blended with historical versions of itself, and hence removes any temporal blending. This froxel is the target froxel, and can be thought of as a high spatiotemporal resolution froxel grid.

If the pipeline is using a 90% blend (i.e. the calculations for the current frame only contribute 10% to the froxel output) then running the frozen state for typically 45 frames reduces the historic influence to negligible levels. Clearly however it is possible to run the frozen state for fewer frames is some residual influence/blending is acceptable.

The resulting high spatiotemporal resolution froxel can then be stored in association with the low resolution froxel for frame T, as part of a training set.

The process can be repeated for each frame in the sequence, running conventionally to that frame and then freezing the state that is being rendered, and rendering it at high resolution using the same pipeline method until the historic blending in effect is washed out and the rendering is substantially only blended with versions of itself.

It will be appreciated that the conventional run in Figure 3A need not be the source of input training data; in principle this conventional run need not be done (though is of course useful for reference), but the run in Figure 3B can provide both the input froxel and the target froxel as shown in Figure 3B, since the time is frozen for when the input froxel is produced.

Other variations will be appreciated; for example if the in-game time for the input froxel at frame T is known and has already been generated previously, then it need not be generated again and the system can freeze the game state at the appropriate time to start generating iterations of the target froxel.

It will also be appreciated that the effect of initial conditions may be negligible after M frames (e.g. M=45). Consequently even for a sequence that is 1000 frames long, it may be acceptable to start running it at T-45 frames to get to an acceptable version of the froxel and fog simulation to start the generation of the target froxel at frame T..

Alternatively or in addition, the state of the game at a frame preceding a current frame by a predetermined amount may be stored, or may be stored on a periodic basis, including the relevant components of the render pipeline such as the froxel values. The game can then be resumed from this point to transparently run as normal until frame T.

This reduces the number of frames that need to be rendered to reach the current frame T, as T progresses through the sequence of frames. Hence for example if T is currently at frame 820, it is not necessary to render 820 normal frames in order to switch over to generating the target froxel for T=820; for example if the game state is saved every 20 frames, then a state from no earlier than frame 800 is available and the system only needs to render up to 20 frames as normal before switching over to generating the target froxel for T=820. In principle this approach could be reduced to T-1 if the state for each preceding frame was saved.

A refinement of the above approaches may also be considered. When generating the target high resolution froxel grid, the time is frozen, and hence the state of the fog simulation from which froxel values are sampled is also frozen. However, it is possible to sample different spatial points within a respective grid element or cell in successive re-renders of the frame. By implementing this dither or jitter within each element or cell of the froxel grid over successive renders, a spatial average for the fog calculation within that grid will form by virtue of the ongoing blending operation; hence a time-averaging process becomes a spatial averaging process. The additional advantage of this approach is to further reduce any blockiness in the fog that may occur by under-sampling; if for example only the centre point of each froxel element is sampled / derived from the fog simulation, then the value difference between neighbours may be high simply due to variability within the fog. However, if random positions within each cell (or a predetermined sampling pattern) are used for successive re-renders, then a value more representative of the cell as a whole is derived, and is likely to remove unrepresentative variability between cells.

In any event, using such processes result in a data set comprising a sequence of low resolution froxel grids derived from normal operation of the rendering pipeline, and a corresponding sequence of high resolution froxel grids representing the same moments of in-game time, but with greater fidelity and effectively without temporal blending (but optionally with intra-cell spatial blending).

Referring now to Figure 3C, this data set can subsequently be used to train the MLM 300 as described elsewhere herein, with the low resolution froxel grids as input and the high resolution froxel grids as the target. It will be appreciated that the MLM in Figure 3C is illustrative only.

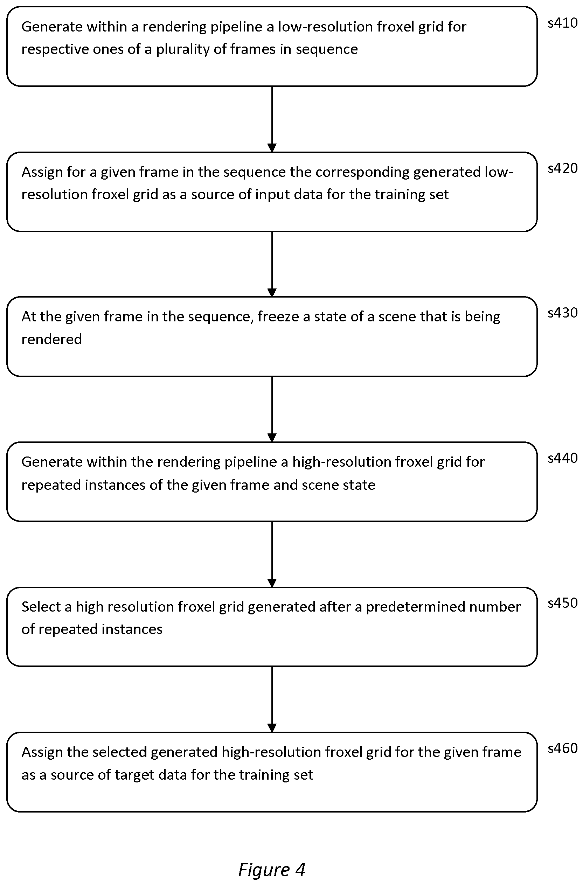

In a summary embodiment, and referring now to Figure 4, a method of generating a training set for a machine learning model that is to upscale volumetric effect froxels comprises the following steps.

Firstly, for a source of input data for the training set,

In a first step s410, generating within a rendering pipeline a low-resolution froxel grid for respective ones of a plurality of frames in sequence, as described elsewhere herein, wherein the generating step within the rendering pipeline comprises a time-averaging of values contributing to the froxel grid, as described elsewhere herein.

In a second step s430, assigning for a given frame in the sequence the corresponding generated low-resolution froxel grid as a source of input data for the training set, as described elsewhere herein.

Secondly, for a source of target data for the training set,
At the given frame in the sequence (e.g. after running the rendering up to that point, or after running it from a point sufficiently previous, or from a saved prior state, as described elsewhere herein) in a third step s430, freezing a state of a scene that is being rendered, as described elsewhere herein.

In a fourth step s440, generating within the rendering pipeline a high-resolution froxel grid for repeated instances of the given frame and scene state, as described elsewhere herein.

In a fifth step s450, selecting a high resolution froxel grid generated after a predetermined number of repeated instances, as described elsewhere herein, the number of repetitions having the effect of sufficiently or substantially removing historical frame contributions from the froxel grid values and only time averaging the same point in time, thereby negating the effect of time averaging within the pipeline, as described elsewhere herein.

And in a sixth step s460, assigning the selected generated high-resolution froxel grid for the given frame as a source of target data for the training set (i.e. for the same given frame), as described elsewhere herein.

As also described elsewhere herein, the input froxel grid can be accompanied by other input data, and either grid may optionally be pre-processed before use, for example for dimensionality reduction to reduce computation.

It will be apparent to a person skilled in the art that variations in the above method corresponding to operation of the various embodiments of the apparatus as described and claimed herein are considered within the scope of the present invention, including but not limited to that:
- the step of generating within the rendering pipeline a high-resolution froxel grid for repeated instances of the given frame and scene state comprises the step of, for individual cells of the froxel grid, obtaining contributing values for different respective positions within the cell for each of the repeated instances, as described elsewhere herein;
- the step of freezing the state of a scene that is being rendered is preceded by one step selected from the list consisting of generating within the rendering pipeline a froxel grid for respective ones of a plurality of frames in sequence up to the given frame, generating within the rendering pipeline a froxel grid for respective ones of a plurality of frames in sequence from a start point a predetermined number of frames prior to the given frame, up to the given frame, and generating within the rendering pipeline a froxel grid for respective frames in sequence starting from a saved scene state prior to the given frame, up to the given frame, as described elsewhere herein;
   - in the above case, optionally the generated froxel grids in the preceding step are low-resolution froxel grids, as described elsewhere herein; and
- contributing values to the froxel grids are computed for a volumetric effect representing one or more selected from the list consisting of fog, smoke, water, mobile particles (e.g. sand, or avalanches, etc.), and fire, as described elsewhere herein.

As a variant of or alternative to this method, notably the above techniques assume that all the low and high resolution froxel grids are generated using the conventional rendering pipeline. However optionally a separate ML model may be trained to predict the evolution of a froxel grid from one or more inputs. In this case, an ML model may be trained on an existing partial series of froxel grids to predict the values of the remaining series of froxel grids. The partial and remaining series may each be contiguous (e.g. input grids 1 to 5, to predict grids 6 to 10) or non-contiguous (e.g. input grids 1, 3, 5, 7, 9 and predict grids 2, 4, 6, 8, 10 in alternating fashion, or similarly input grids 1, 4, 7 and predict grids 2, 3, 5, 6, 8, 9), and the like. Alternatively or in addition other interpolation or extrapolation techniques may be used, such as optical flow and tracking/Kalman filters to predict froxel grid values.

Using these methods, synthetic training data could be generated instead of, or to supplement, training data generated by the techniques above, based on inputs and targets generated using the techniques above.

Notably once an ML model (or respective ML models for low and high resolution froxel grids) has been trained, then they can generate synthetic training data without the need to generate the high resolution grids multiple times, since they have been trained on the final results of this process. This can enable the generation of synthetic training data more efficiently.

As noted above, the synthetic data can be the result of a continuous output of the ML model, or can be used alternately with conventional rendering pipeline data to reduce the overall computational load whilst generating a set of training data in which the ML generated contributions do not have the opportunity to diverge significantly from the output of the conventional rendering pipeline because typically they are only predicting one or a small number of froxel grids at a time from recent data.

Hence optionally in the above summary, a variation in the above method includes that at least some of the high resolution froxel grids and optionally some of the low resolution froxel grids are generated by a (respective) ML model trained to predict such froxel grids, thereby avoiding the need to implement steps 440 and 450 above at least for some frames in the sequence, and instead select at least a high resolution froxel grid generated by the ML model.

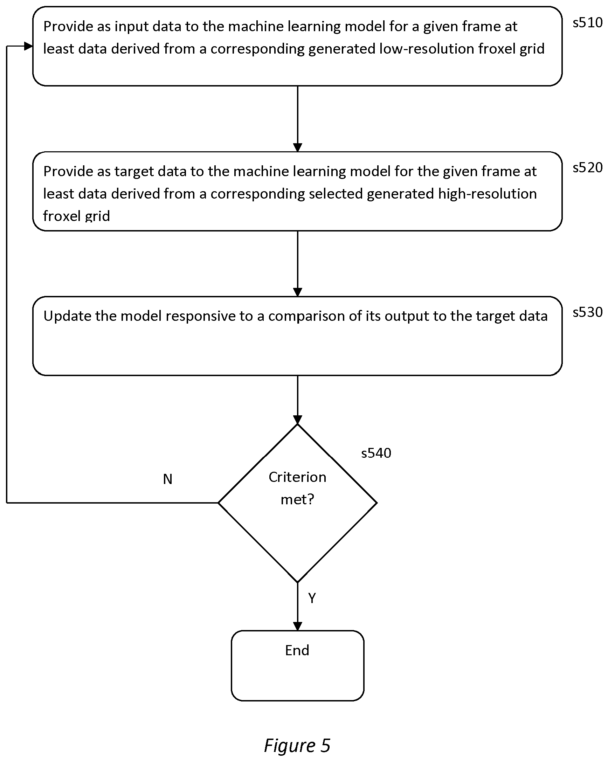

Referring now to Figure 5, in a summary embodiment of the present description a method of training a machine learning model that is to upscale volumetric effect froxel grids, using a training set generated according to any of the techniques described herein, comprises the following steps.

Repeating, for a plurality of frames:
In a first step s510, providing as input data to the machine learning model for a given frame at least data derived from a corresponding generated low-resolution froxel grid, as described elsewhere herein;
In a second step s520, providing as target data to the machine learning model for the given frame at least data derived from a corresponding selected generated high-resolution froxel grid, as described elsewhere herein; and
In a third step s530, updating the model responsive to a comparison of its output to the target data; the update may use any suitable machine learning algorithm for any suitable machine learning architecture. As a non-limiting example, a super resolution convolutional neural network and associated updating regime may be used.

These steps are repeated until a training criterion is met at step s540. The criterion may be based on model convergence (e.g. output error drops below a threshold or threshold average), or may be based on a training budget (e.g. training cycles or training set repetitions). The criterion may also have one or more failover modes, for example if output error fails to drop, or drop by a certain amount, during a certain period or after a certain period.

It will be appreciated that the training set may be generated separately to subsequent training of a machine learning model using that training set.

Similarly, it will be appreciated that use of the trained machine learning model to upscale volumetric effect froxel grids may occur separately from the training of that model.

Hence for example generation of the training set may occur by running a development kit for a videogame console, with different parameters for low and high resolution froxel grids, as described previously herein.

The training itself may occur either on such a development kit, or for example within a cloud computing environment, as training can be computationally burdensome.

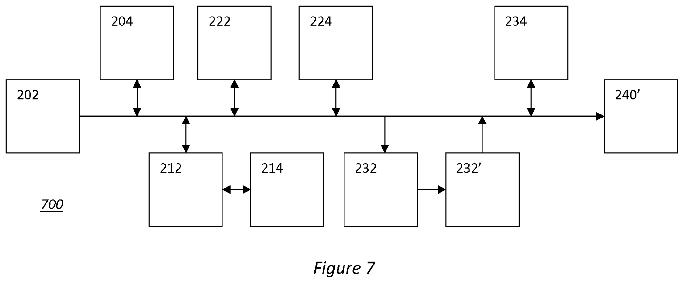

Subsequently, and referring now to Figure 7, inference (i.e. use of the trained machine learning model) may occur during game runtime on the videogame console itself, using a modified rendering pipeline 700.

Figure 7 substantially corresponds to Figure 2. However, in the additional elements section 232, volumetric effects (or equivalently effects dependent upon use of a froxel grid) generated using the standard low-resolution time averaged technique of the pipeline are not themselves used by the pipeline. Instead, they are diverted to the trained MLM 232' (along with any other input data and/or preprocessing, as described elsewhere herein), which outputs a high resolution froxel grid that is then used by the pipeline.

In this way, a high quality volumetric effect can be provided based upon the low quality legacy technique of the existing render pipeline, and this can be achieved using comparatively less computing resource than if the high quality volumetric effect was derived directly by calculating a high resolution froxel grid from scratch.

The result is a higher quality final rendered image 240'.

This modified render pipeline comprising the trained MLM can be incorporated into a game engine, and/or into a specific game.

The MLM can be one previously trained on generic volumetric data, or chosen from one trained on generic data for a specific type of volumetric effect (fog, smoke, water, mobile particulates, fire, etc), or a development kit can provide a tool for generating training data from a render pipeline running a specific game title (for example in the event that the volumetric effect in that game title does not obey conventional physics, or is for a very different physical environment to that used for an existing trained MLM, such as being weightless), and this data can be used to train a bespoke MLM for that title.

The game engine and/or specific game can be hosted and run on a videogame console, cloud gaming server, or other suitable device, and typically can be run at a higher resolution, higher frame rate, and/or with higher quality settings than would otherwise be possible if the high resolution froxel grid was being generated from scratch.

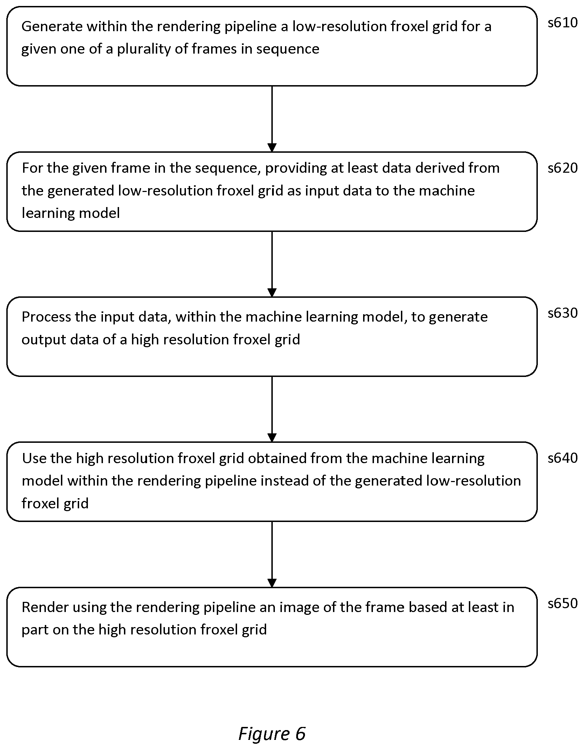

Hence referring now to Figure 6, in a summary embodiment of the present description, a method of upscaling volumetric effect froxel grids, using a machine learning model trained according to the techniques described herein, comprising the following steps.

In a first step s610, generating within the rendering pipeline a low-resolution froxel grid for a given one of a plurality of frames in sequence, wherein the generating step within the rendering pipeline comprises a time-averaging of values contributing to the froxel grid, as described elsewhere herein.

In a second step s620, for the given frame in the sequence, providing at least data derived from the generated low-resolution froxel grid as input data to the machine learning model, as described elsewhere herein.

In a third step s630, process the input data, within the machine learning model, to generate output data of a high resolution froxel grid, as described elsewhere herein.

In a fourth step s640, using the high resolution froxel grid obtained from the machine learning model within the rendering pipeline instead of the generated low-resolution froxel grid, as described elsewhere herein.

And in a fifth step s650, render using the rendering pipeline an image of the frame based at least in part on the high resolution froxel grid, as described elsewhere herein.

It will be apparent to a person skilled in the art that variations in the above method corresponding to operation of the various embodiments of the apparatus as described and claimed herein are considered within the scope of the present invention, including but not limited to that:
- the machine learning model was trained on data relating to a specific type of volumetric effect, as described elsewhere herein; and
- the machine learning model was trained on data relating to a volumetric effect specific to a particular game (or equivalently, simulation environment), as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, a training set generating apparatus (for example entertainment device 10 or a development kit thereof, or a graphics card) for a machine learning model that is to upscale volumetric effect froxel grids, comprises:
For a source of input data for the training set, a rendering pipeline (e.g. GPU 30) configured (for example by suitable software instruction) to generate a low-resolution froxel grid for respective ones of a plurality of frames in sequence, wherein the rendering pipeline is configured to perform a time-averaging of values contributing to the froxel grid, as described elsewhere herein; and a training set processor (e.g. CPU 20) configured (for example by suitable software instruction) to assign for a given frame in the sequence the corresponding generated low-resolution froxel grid as a source of input data for the training set, as described elsewhere herein;
For a source of target data for the training set, the training set processor is configured (for example by suitable software instruction) to freeze the state of a scene that is being rendered at the given frame in the sequence, as described elsewhere herein; the rendering pipeline is configured (for example by suitable software instruction) to generate a high-resolution froxel grid for repeated instances of the given frame and scene state, as described elsewhere herein; the training set processor is configured (for example by suitable software instruction) to select a high resolution froxel grid generated after a predetermined number of repeated instances, as described elsewhere herein; and the training set processor is configured (for example by suitable software instruction) to assign the selected generated high-resolution froxel grid for the given frame as a source of target data for the training set, as described elsewhere herein.

Instances of this summary embodiment implementing the methods and techniques described herein (for example by use of suitable software instruction) are envisaged within the scope of the application.

Similarly, in a summary embodiment of the present description, a training apparatus (for example entertainment device 10 or a development kit thereof, a cloud computing platform, or other computing platform) for training a machine learning model for upscaling volumetric effect froxel grids, using a training set generated according to any one of the preceding claims, comprises the following.

A training processor (for example CPU 20) configured (for example by suitable software instruction) to repeat, for a plurality of frames, the steps of:
- providing as input data to the machine learning model for a given frame at least data derived from a corresponding generated low-resolution froxel grid;
- providing as target data to the machine learning model for the given frame at least data derived from a corresponding selected generated high-resolution froxel grid; and
- updating the model responsive to a comparison of its output to the target data,
until a training criterion is met, as described elsewhere herein.

Similarly again, in a summary embodiment of the present description, a rendering apparatus (for example entertainment device 10 or a development kit thereof, or a graphics card thereof or a standalone graphics card component) comprises the following.
Memory (e.g. RAM 40, and/or memory within GPU 30, or within a so-called neural engine or neural coprocessor, not shown), holding a machine learning model trained according to the techniques / apparatus described herein;
A graphics processor (e.g. GPU 30) configured (for example by suitable software instruction) to generate within a rendering pipeline a low-resolution froxel grid for a given one of a plurality of frames in a sequence, wherein the graphics processor is configured to time-average values contributing to the froxel grid, as described elsewhere herein;
The machine learning model being configured to receive as input data, for the given frame in the sequence, at least data derived from the generated low-resolution froxel, as described elsewhere herein;
The machine learning model being configured (for example by suitable software instruction) to process the input data, to generate output data of a high resolution froxel grid, as described elsewhere herein;
The graphics processor being configured (for example by suitable software instruction) to use the high resolution froxel grid obtained from the machine learning model within the rendering pipeline instead of the generated low-resolution froxel grid, as described elsewhere herein; and
The graphics processor being configured (for example by suitable software instruction) to render, using the rendering pipeline, an image of the frame based at least in part on the high resolution froxel grid, as described elsewhere herein.

The machine learning model may be generic to volumetric effects, or to a specific type of volumetric effect, or specific to a volumetric effect of a specific application, as described elsewhere herein.

The rendering apparatus itself may in turn be part of an entertainment device 10, or a cloud gaming server, or TV / Film visual effects workstation, or the like.

The foregoing discussion discloses and describes merely exemplary embodiments of the present disclosure. Accordingly, the present disclosure is intended to be illustrative, but not limiting of the scope of the invention, which is defined in the appended claims.

## Claims

1. A computer-implemented method of generating a training set, for a machine learning model that is to upscale volumetric effect froxel grids, comprises the steps of:
for a source of input data for the training set,
generating within a rendering pipeline a low-resolution froxel grid for respective ones of a plurality of frames in sequence, wherein
the generating step within the rendering pipeline comprises a time-averaging of values contributing to the froxel grid;
assigning for a given frame in the sequence the corresponding generated low-resolution froxel grid as a source of input data for the training set;
for a source of target data for the training set,
at the given frame in the sequence, freezing the state of a scene that is being rendered;
generating within the rendering pipeline a high-resolution froxel grid for repeated instances of the given frame and scene state;
selecting a high resolution froxel grid generated after a predetermined number of repeated instances; and
assigning the selected generated high-resolution froxel grid for the given frame as a source of target data for the training set.

2. The method of claim 1, in which the step of generating within the rendering pipeline a high-resolution froxel grid for repeated instances of the given frame and scene state comprises the step of:
for individual cells of the froxel grid, obtaining contributing values for different respective positions within the cell for each of the repeated instances.

3. The method of claim 1 or claim 2, in which the step of freezing the state of a scene that is being rendered is preceded by one step selected from the list consisting of:
i. generating within the rendering pipeline a froxel grid for respective ones of a plurality of frames in sequence up to the given frame;
ii. generating within the rendering pipeline a froxel grid for respective ones of a plurality of frames in sequence from a start point a predetermined number of frames prior to the given frame, up to the given frame; and
iii. generating within the rendering pipeline a froxel grid for respective frames in sequence starting from a saved scene state prior to the given frame, up to the given frame.

4. The method of claim 3, in which the generated froxel grids according to generating steps i., ii., or iii. are low-resolution froxel grids.

5. The method of any preceding claim, in which:
contributing values to the froxel grids are computed for a volumetric effect representing one or more selected from the list consisting of:
i. fog;
ii. smoke;
iii. water;
iv. mobile particles; and
v. fire.

6. A computer-implemented method of training a machine learning model for upscaling volumetric effect froxel grids, using a training set generated according to any one of the preceding claims, comprising the steps of:
repeating, for a plurality of frames,
providing as input data to the machine learning model for a given frame at least froxel data derived from a corresponding generated low-resolution froxel grid;
providing as target data to the machine learning model for the given frame at least froxel data derived from a corresponding selected generated high-resolution froxel grid; and
updating the model responsive to a comparison of its output to the target data,
until a training criterion is met.

7. A computer-implemented method of upscaling volumetric effect froxel grids, using a machine learning model trained according to claim 6, comprising the steps of:
generating within the rendering pipeline a low-resolution froxel grid for a given one of a plurality of frames in sequence, wherein
the generating step within the rendering pipeline comprises a time-averaging of values contributing to the low-resolution froxel grid;
for the given frame in the sequence, providing at least froxel data derived from the generated low-resolution froxel grid as input data to the machine learning model;
processing the input data, within the machine learning model, to generate output data of a high resolution froxel grid;
using the high resolution froxel grid obtained from the machine learning model within the rendering pipeline instead of the generated low-resolution froxel grid; and
rendering using the rendering pipeline an image of the frame based at least in part on the high resolution froxel grid.

8. The method of claim 7, in which the machine learning model was trained on data relating to a specific type of volumetric effect.

9. The method of claim 7 or claim 8, in which the machine learning model was trained on data relating to a volumetric effect specific to a particular game.

10. A computer program comprising computer executable instructions which, when executed by a computer system, cause the computer system to perform the method of any one of the preceding claims.

11. A training set generating apparatus for a machine learning model that is to upscale volumetric effect froxel grids, comprising:
for a source of input data for the training set,
a rendering pipeline configured to generate a low-resolution froxel grid for respective ones of a plurality of frames in sequence, wherein
the rendering pipeline is configured to perform a time-averaging of values contributing to the low-resolution froxel grid;
a training set processor configured to assign for a given frame in the sequence the corresponding generated low-resolution froxel grid as a source of input data for the training set;
for a source of target data for the training set,
the training set processor is configured to freeze the state of a scene that is being rendered at the given frame in the sequence;
the rendering pipeline is configured to generate a high-resolution froxel grid for repeated instances of the given frame and scene state;
the training set processor is configured to select a high resolution froxel grid generated after a predetermined number of repeated instances; and
the training set processor is configured to assign the selected generated high-resolution froxel grid for the given frame as a source of target data for the training set.

12. A training apparatus for training a machine learning model for upscaling volumetric effect froxel grids, using a training set generated according to any one of the methods according to claims 1-5 or by the apparatus of claim 11, comprising:
a training processor configured to repeat, for a plurality of frames,
providing as input data to the machine learning model for a given frame at least froxel data derived from a corresponding generated low-resolution froxel grid;
providing as target data to the machine learning model for the given frame at least froxel data derived from a corresponding selected generated high-resolution froxel grid; and
updating the model responsive to a comparison of its output to the target data,
until a training criterion is met.

13. A rendering apparatus, comprising:
memory, holding a machine learning model trained according to the method of claim 6 or apparatus of claim 12;
a graphics processor configured to generate within a rendering pipeline a low-resolution froxel grid for a given one of a plurality of frames in a sequence,
the graphics processor being configured to time-average values contributing to the low-resolution froxel grid;
the machine learning model being configured to receive as input data, for the given frame in the sequence, at least froxel data derived from the generated low-resolution froxel grid;
the machine learning model being configured to process the input data, to generate output data of a high resolution froxel grid;
the graphics processor being configured to use the high resolution froxel grid obtained from the machine learning model within the rendering pipeline instead of the generated low-resolution froxel grid; and
the graphics processor being configured to render, using the rendering pipeline, an image of the frame based at least in part on the high resolution froxel grid.

14. The apparatus of claim 13, in which the machine learning model was trained on data relating to a specific type of volumetric effect.

15. An entertainment device comprising the rendering apparatus of claim 13 or claim 14.

## Patentansprüche

1. Computerimplementiertes Verfahren zum Erzeugen eines Trainingssatzes für ein Modell für maschinelles Lernen, das dazu dient, Froxel-Gitter für volumetrische Effekte hochzuskalieren, das die Schritte umfasst:
für eine Quelle von Eingabedaten für den Trainingssatz,
Erzeugen innerhalb einer Rendering-Pipeline eines niedrigauflösenden Froxel-Gitters für jeweilige einer Vielzahl von Frames in Sequenz, wobei
der Erzeugungsschritt innerhalb der Rendering-Pipeline eine zeitliche Mittelung von Werten umfasst, die zu dem Froxel-Gitter beitragen;
Zuweisen, für einen gegebenen Frame in der Sequenz, des entsprechenden erzeugten niedrigauflösenden Froxel-Gitters als eine Quelle von Eingabedaten für den Trainingssatz;
für eine Quelle von Zieldaten für den Trainingssatz,
bei dem gegebenen Frame in der Sequenz, Einfrieren des Zustands einer Szene, die gerendert wird;
Erzeugen eines hochauflösenden Froxel-Gitters innerhalb der Rendering-Pipeline für wiederholte Instanzen des gegebenen Frame- und Szenenzustands;
Auswählen eines hochauflösenden Froxel-Gitters, das nach einer vorbestimmten Anzahl wiederholter Instanzen erzeugt wird; und
Zuweisen des ausgewählten erzeugten hochauflösenden Froxel-Gitters für den gegebenen Frame als eine Quelle von Zieldaten für den Trainingssatz.

2. Verfahren nach Anspruch 1, wobei der Schritt des Erzeugens eines hochauflösenden Froxel-Gitters innerhalb der Rendering-Pipeline für wiederholte Instanzen von dem gegebenen Frame- und Szenenzustand den Schritt umfasst:
für einzelne Zellen des Froxel-Gitters, Erhalten von Beitragswerten für verschiedene jeweilige Positionen innerhalb der Zelle für jede der wiederholten Instanzen.

3. Verfahren nach Anspruch 1 oder 2, wobei dem Schritt des Einfrierens des Zustands einer Szene, die gerendert wird, ein Schritt vorausgeht, der ausgewählt ist aus der Liste, bestehend aus:
i. Erzeugen, innerhalb der Rendering-Pipeline, eines Froxel-Gitters für jeweilige einer Vielzahl von Frames in Sequenz bis zu dem gegebenen Frame;
ii. Erzeugen, innerhalb der Rendering-Pipeline, eines Froxel-Gitters für jeweilige einer Vielzahl von Frames in Sequenz von einem Startpunkt eine vorbestimmte Anzahl von Frames vor dem gegebenen Frame bis zu dem gegebenen Frame; und
iii. Erzeugen, innerhalb der Rendering-Pipeline, eines Froxel-Gitters für jeweilige Frames in Sequenz, beginnend bei einem gespeicherten Szenenzustand vor dem gegebenen Frame bis zu dem gegebenen Frame.

4. Verfahren nach Anspruch 3, wobei die gemäß den Erzeugungsschritten i., ii. oder iii. erzeugten Froxel-Gitter niedrigauflösende Froxel-Gitter sind.

5. Verfahren nach einem der vorstehenden Ansprüche, wobei:
Beitragswerte zu den Froxel-Gittern für einen volumetrischen Effekt berechnet werden, der eines oder mehrere darstellt, ausgewählt aus der Liste, bestehend aus:
i. Nebel;
ii. Rauch;
iii. Wasser;
iv. beweglichen Partikeln; und
v. Feuer.

6. Computerimplementiertes Verfahren zum Trainieren eines Modells für maschinelles Lernen zum Hochskalieren von Froxel-Gittern für volumetrische Effekte unter Verwendung eines Trainingssatzes, der nach einem der vorstehenden Ansprüche erzeugt wird, umfassend die Schritte:
Wiederholen, für eine Vielzahl von Frames,
Bereitstellen, als Eingabedaten für das Modell für maschinelles Lernen für einen gegebenen Frame, von mindestens Froxel-Daten, die aus einem entsprechenden erzeugten niedrigauflösenden Froxel-Gitter abgeleitet sind;
Bereitstellen, als Zieldaten an das Modell für maschinelles Lernen für den gegebenen Frame, von mindestens Froxel-Daten, die aus einem entsprechenden ausgewählten erzeugten hochauflösenden Froxel-Gitter abgeleitet sind; und
Aktualisieren des Modells als Reaktion auf einen Vergleich seiner Ausgabe mit den Zieldaten,
bis ein Trainingskriterium erfüllt ist.

7. Computerimplementiertes Verfahren zum Hochskalieren von Froxel-Gittern für volumetrische Effekte unter Verwendung eines Modells für maschinelles Lernen, das nach Anspruch 6 trainiert wird, umfassend die Schritte:
Erzeugen eines niedrigauflösenden Froxel-Gitters innerhalb der Rendering-Pipeline für einen gegebenen einer Vielzahl von Frames in Sequenz, wobei
der Erzeugungsschritt innerhalb der Rendering-Pipeline eine zeitliche Mittelung von Werten umfasst, die zu dem niedrigauflösenden Froxel-Gitter beitragen;
für den gegebenen Frame in der Sequenz, Bereitstellen von mindestens Froxel-Daten, die aus dem erzeugten niedrigauflösenden Froxel-Gitter abgeleitet sind, als Eingabedaten für das Modell für maschinelles Lernen;
Verarbeiten der Eingabedaten innerhalb des Modells für maschinelles Lernen, um Ausgabedaten eines hochauflösenden Froxel-Gitters zu erzeugen;
Verwenden des hochauflösenden Froxel-Gitters, das aus dem Modell für maschinelles Lernen erhalten wird, innerhalb der Rendering-Pipeline anstelle des erzeugten niedrigauflösenden Froxel-Gitters; und
Rendern, unter Verwendung der Rendering-Pipeline, eines Bildes des Frames basierend mindestens teilweise auf dem hochauflösenden Froxel-Gitter.

8. Verfahren nach Anspruch 7, wobei das Modell für maschinelles Lernen mit Daten trainiert wird, die sich auf eine spezifische Art von volumetrischem Effekt beziehen.

9. Verfahren nach Anspruch 7 oder 8, wobei das Modell für maschinelles Lernen mit Daten trainiert wird, die sich auf einen für ein bestimmtes Spiel spezifischen volumetrischen Effekt beziehen.

10. Computerprogramm, umfassend computerausführbare Anweisungen, die, wenn sie durch ein Computersystem ausgeführt werden, das Computersystem veranlassen, das Verfahren nach einem der vorstehenden Ansprüche durchzuführen.

11. Einrichtung zum Erzeugen eines Trainingssatzes für ein Modell für maschinelles Lernen, das dazu dient, Froxel-Gitter für volumetrische Effekte hochzuskalieren, umfassend:
für eine Quelle von Eingabedaten für den Trainingssatz,
eine Rendering-Pipeline, die konfiguriert ist, um ein niedrigauflösendes Froxel-Gitter für jeweilige einer Vielzahl von Frames in Sequenz zu erzeugen, wobei
die Rendering-Pipeline konfiguriert ist, um eine zeitliche Mittelung von Werten durchzuführen, die zu dem niedrigauflösenden Froxel-Gitter beitragen;
einen Trainingssatz-Prozessor, der konfiguriert ist, für einen gegebenen Frame in der Sequenz das entsprechende erzeugte niedrigauflösende Froxel-Gitter als eine Quelle von Eingabedaten für den Trainingssatz zuzuweisen;
für eine Quelle von Zieldaten für den Trainingssatz,
der Trainingssatz-Prozessor konfiguriert ist, um den Zustand einer Szene einzufrieren, die bei dem gegebenen Frame in der Sequenz gerendert wird;
die Rendering-Pipeline konfiguriert ist, um ein hochauflösendes Froxel-Gitter für wiederholte Instanzen des gegebenen Frame- und Szenenzustands zu erzeugen;
der Trainingssatz-Prozessor konfiguriert ist, um ein hochauflösendes Froxel-Gitter auszuwählen, das nach einer vorbestimmten Anzahl wiederholter Instanzen erzeugt wird; und
der Trainingssatz-Prozessor konfiguriert ist, um das ausgewählte erzeugte hochauflösende Froxel-Gitter für den gegebenen Frame als eine Quelle von Zieldaten für den Trainingssatz zuzuweisen.

12. Trainingseinrichtung zum Trainieren eines Modells für maschinelles Lernen zum Hochskalieren von Froxel-Gittern für volumetrische Effekte unter Verwendung eines Trainingssatzes, der gemäß einem der Verfahren nach den Ansprüchen 1 bis 5 oder durch die Einrichtung nach Anspruch 11 erzeugt wird, umfassend:
ein Trainingsprozessor, der konfiguriert ist, um für eine Vielzahl von Frames zu wiederholen,
Bereitstellen, als Eingabedaten für das Modell für maschinelles Lernen für einen gegebenen Frame, von mindestens Froxel-Daten, die aus einem entsprechenden erzeugten niedrigauflösenden Froxel-Gitter abgeleitet sind;
Bereitstellen, als Zieldaten an das Modell für maschinelles Lernen für den gegebenen Frame, von mindestens Froxel-Daten, die aus einem entsprechenden ausgewählten erzeugten hochauflösenden Froxel-Gitter abgeleitet sind; und
Aktualisieren des Modells als Reaktion auf einen Vergleich seiner Ausgabe mit den Zieldaten,
bis ein Trainingskriterium erfüllt ist.

13. Rendering-Einrichtung, umfassend:
einen Speicher, der ein Modell für maschinelles Lernen hält, das gemäß dem Verfahren nach Anspruch 6 oder der Einrichtung nach Anspruch 12 trainiert ist;
einen Grafikprozessor, der konfiguriert ist, um innerhalb einer Rendering-Pipeline ein niedrigauflösendes Froxel-Gitter für einen gegebenen einer Vielzahl von Frames in einer Sequenz zu erzeugen,
wobei der Grafikprozessor konfiguriert ist, um Werte, die zu dem niedrigauflösenden Froxel-Gitter beitragen, zeitlich zu mitteln;
wobei das Modell für maschinelles Lernen konfiguriert ist, um als Eingabedaten für den gegebenen Frame in der Sequenz mindestens Froxel-Daten zu empfangen, die aus dem erzeugten niedrigauflösenden Froxel-Gitter abgeleitet sind;
wobei das Modell für maschinelles Lernen konfiguriert ist, um die Eingabedaten zu verarbeiten, um Ausgabedaten eines hochauflösenden Froxel-Gitters zu erzeugen;
wobei der Grafikprozessor konfiguriert ist, um das hochauflösende Froxel-Gitter, das aus dem Modell für maschinelles Lernen erhalten wird, innerhalb der Rendering-Pipeline anstelle des erzeugten niedrigauflösenden Froxel-Gitters zu verwenden; und
wobei der Grafikprozessor konfiguriert ist, um unter Verwendung der Rendering-Pipeline ein Bild des Frames mindestens teilweise basierend auf dem hochauflösenden Froxel-Gitter zu rendern.

14. Einrichtung nach Anspruch 13, wobei das Modell für maschinelles Lernen mit Daten trainiert wird, die sich auf eine spezifische Art von volumetrischem Effekt beziehen.

15. Unterhaltungsvorrichtung, umfassend die Rendering-Einrichtung nach Anspruch 13 oder 14.

## Revendications

1. Procédé mis en œuvre par ordinateur de génération d'un ensemble d'entraînement, pour un modèle d'apprentissage automatique qui est destiné à mettre à l'échelle supérieure des grilles de froxels d'effets volumétriques, comprend les étapes consistant à :
pour une source de données d'entrée pour l'ensemble d'entraînement,
générer, dans un pipeline de rendu, une grille de froxels à basse résolution pour les unes respectives d'une pluralité de trames en séquence, dans lequel
l'étape de génération dans le pipeline de rendu comprend un moyennage temporel de valeurs contribuant à la grille de froxels ;
attribuer, pour une trame donnée dans la séquence, la grille de froxels à basse résolution générée correspondante comme source de données d'entrée pour l'ensemble d'entraînement ;
pour une source de données cibles pour l'ensemble d'entraînement,
au niveau de la trame donnée dans la séquence, figer l'état d'une scène qui est en cours de rendu ;
générer, dans le pipeline de rendu, une grille de froxels à haute résolution pour des instances répétées de la trame et de l'état de scène donnés ;
sélectionner une grille de froxels à haute résolution générée après un nombre prédéfini d'instances répétées ; et
attribuer la grille de froxels à haute résolution générée sélectionnée pour la trame donnée en tant que source de données cibles pour l'ensemble d'entraînement.

2. Procédé selon la revendication 1, dans lequel l'étape de génération, dans le pipeline de rendu, d'une grille de froxels à haute résolution pour des instances répétées de la trame et de l'état de scène donnés comprend l'étape consistant à :
pour des cellules individuelles de la grille de froxels, obtenir de valeurs de contribution pour différentes positions respectives dans la cellule pour chacune des instances répétées.

3. Procédé selon la revendication 1 ou la revendication 2, dans lequel l'étape de figement de l'état d'une scène qui est en cours de rendu est précédée d'une étape choisie dans la liste consistant à :
i. générer, dans le pipeline de rendu, une grille de froxels pour les unes respectives d'une pluralité de trames en séquence jusqu'à la trame donnée ;
ii. générer, dans le pipeline de rendu, une grille de froxels pour les unes respectives d'une pluralité de trames en séquence à partir d'un point de départ d'un nombre prédéfini de trames avant la trame donnée, jusqu'à la trame donnée ; et
iii. générer, dans le pipeline de rendu, une grille de froxels pour des trames respectives en séquence à partir d'un état de scène sauvegardé antérieur à la trame donnée, jusqu'à la trame donnée.

4. Procédé selon la revendication 3, dans lequel les grilles de froxels générées conformément aux étapes de génération i., ii. ou iii. sont des grilles de froxels à basse résolution.

5. Procédé selon l'une quelconque revendication précédente, dans lequel :
des valeurs de contribution aux grilles de froxels sont calculées pour un effet volumétrique représentant un ou plusieurs éléments choisis dans la liste consistant à :
i. un brouillard ;
ii. une fumée ;
iii. de l'eau ;
iv. des particules mobiles ; et
v. un feu.

6. Procédé mis en œuvre par ordinateur d'entraînement d'un modèle d'apprentissage automatique pour la mise à l'échelle supérieure de grilles de froxels d'effets volumétriques, à l'aide d'un ensemble d'entraînement généré selon l'une quelconque des revendications précédentes, comprenant les étapes consistant à :
répéter, pour une pluralité de trames,
la fourniture en tant que données d'entrée au modèle d'apprentissage automatique pour une trame donnée d'au moins des données de froxels dérivées d'une grille de froxels à basse résolution générée correspondante ;
la fourniture en tant que données cibles au modèle d'apprentissage automatique pour la trame donnée d'au moins des données de froxels dérivées d'une grille de froxels à haute résolution générée sélectionnée correspondante ; et
la mise à jour du modèle en réponse à une comparaison de sa sortie aux données cibles,
jusqu'à ce qu'un critère d'entraînement soit satisfait.

7. Procédé mis en œuvre par ordinateur de mise à l'échelle supérieure de grilles de froxels d'effets volumétriques, à l'aide d'un modèle d'apprentissage automatique entraîné selon la revendication 6, comprenant les étapes consistant à :
générer, dans le pipeline de rendu, une grille de froxels à basse résolution pour l'une donnée d'une pluralité de trames en séquence, dans lequel
l'étape de génération dans le pipeline de rendu comprend un moyennage temporel de valeurs contribuant à la grille de froxels à basse résolution ;
pour la trame donnée dans la séquence, fournir au moins des données de froxels dérivées de la grille de froxels à basse résolution générée en tant que données d'entrée au modèle d'apprentissage automatique ;
traiter les données d'entrée, dans le modèle d'apprentissage automatique, pour générer des données de sortie d'une grille de froxels à haute résolution ;
utiliser la grille de froxels à haute résolution obtenue à partir du modèle d'apprentissage automatique dans le pipeline de rendu au lieu de la grille de froxels à basse résolution générée; et
rendre, en utilisant le pipeline de rendu, une image de la trame sur la base au moins en partie de la grille de froxels à haute résolution.

8. Procédé selon la revendication 7, dans lequel le modèle d'apprentissage automatique a été entraîné sur des données relatives à un type spécifique d'effet volumétrique.

9. Procédé selon la revendication 7 ou la revendication 8, dans lequel le modèle d'apprentissage automatique a été entraîné sur des données relatives à un effet volumétrique spécifique à un jeu particulier.

10. Programme d'ordinateur comprenant des instructions exécutables par un ordinateur qui, lorsqu'elles sont exécutées par un système d'ordinateur, amènent le système d'ordinateur à mettre en œuvre le procédé selon l'une quelconque des revendications précédentes.

11. Appareil de génération d'ensemble d'entraînement pour un modèle d'apprentissage automatique destiné à mettre à l'échelle supérieure des grilles de froxels d'effets volumétriques, comprenant :
pour une source de données d'entrée pour l'ensemble d'entraînement,
un pipeline de rendu configuré pour générer une grille de froxels à basse résolution pour les unes respectives d'une pluralité de trames en séquence, dans lequel
le pipeline de rendu est configuré pour effectuer un moyennage temporel des valeurs contribuant à la grille de froxels à basse résolution ;
un processeur d'ensemble d'entraînement configuré pour attribuer pour une trame donnée dans la séquence la grille de froxels à basse résolution générée correspondante en tant que source de données d'entrée pour l'ensemble d'entraînement ;
pour une source de données cibles pour l'ensemble d'entraînement,
le processeur d'ensemble d'entraînement est configuré pour figer l'état d'une scène qui est en cours de rendu au niveau de la trame donnée dans la séquence ;
le pipeline de rendu est configuré pour générer une grille de froxels à haute résolution pour des instances répétées de la trame et de l'état de scène donnés ;
le processeur d'ensemble d'apprentissage est configuré pour sélectionner une grille de froxels à haute résolution générée après un nombre prédéfini d'instances répétées ; et
le processeur d'ensemble d'entraînement est configuré pour attribuer la grille de froxels à haute résolution générée sélectionnée pour la trame donnée en tant que source de données cibles pour l'ensemble d'entraînement.

12. Appareil d'entraînement permettant d'entraîner un modèle d'apprentissage automatique pour la mise à l'échelle supérieure de grilles de froxels d'effets volumétriques, à l'aide d'un ensemble d'entraînement généré conformément à l'un quelconque des procédés selon les revendications 1 à 5 ou au moyen de l'appareil selon la revendication 11, comprenant :
un processeur d'entraînement configuré pour répéter, pour une pluralité de trames,
la fourniture en tant que données d'entrée au modèle d'apprentissage automatique pour une trame donnée d'au moins des données de froxels dérivées d'une grille de froxels à basse résolution générée correspondante ;
la fourniture en tant que données cibles au modèle d'apprentissage automatique pour la trame donnée d'au moins des données de froxels dérivées d'une grille de froxels à haute résolution générée sélectionnée correspondante ; et
la mise à jour du modèle en réponse à une comparaison de sa sortie aux données cibles,
jusqu'à ce qu'un critère d'entraînement soit satisfait.

13. Appareil de rendu, comprenant :
une mémoire, contenant un modèle d'apprentissage automatique entraîné conformément au procédé selon la revendication 6 ou à l'appareil selon la revendication 12 ;
un processeur graphique configuré pour générer dans un pipeline de rendu une grille de froxels à basse résolution pour l'une donnée d'une pluralité de trames dans une séquence,
le processeur graphique étant configuré pour établir la moyenne temporelle des valeurs contribuant à la grille de froxels à basse résolution ;
le modèle d'apprentissage automatique étant configuré pour recevoir en tant que données d'entrée, pour la trame donnée dans la séquence, au moins des données de froxels dérivées de la grille de froxels à basse résolution générée ;
le modèle d'apprentissage automatique étant configuré pour traiter les données d'entrée, afin de générer des données de sortie d'une grille de froxels à haute résolution ;
le processeur graphique étant configuré pour utiliser la grille de froxels à haute résolution obtenue à partir du modèle d'apprentissage automatique dans le pipeline de rendu au lieu de la grille de froxels à basse résolution générée ; et
le processeur graphique étant configuré pour rendre, en utilisant le pipeline de rendu, une image de la trame sur la base au moins en partie de la grille de froxels à haute résolution.

14. Appareil selon la revendication 13, dans lequel le modèle d'apprentissage automatique a été entraîné sur des données relatives à un type spécifique d'effet volumétrique.

15. Dispositif de divertissement comprenant l'appareil de rendu selon la revendication 13 ou la revendication 14.
